# EUROPÄISCHE PATENTSCHRIFT

(11) **EP 3 048 403 B1**
(45) Veröffentlichungstag und Bekanntmachung des Hinweises auf die Patenterteilung: **29.11.2017**
(21) Anmeldenummer: 15152140.8
(22) Anmeldetag: 22.01.2015
(51) Int. Cl.: C03B 35/18, F27B 9/24, F27D 99/00, C03B 35/16, F27B 9/30, F27D 3/02

(54) **Tragrollenwechselvorrichtung und Verfahren zum Tragrollenwechsel**
Support roller exchange device and method
Dispositif de changement de rouleau porteur et procédé de changement de rouleau porteur

(30) Priorität: 20.01.2015 EP 15151782; 21.01.2015 EP 15151976
(43) Veröffentlichungstag der Anmeldung: 27.07.2016
(73) Patentinhaber: LOI Thermprocess GmbH, 45141 Essen (DE)
(72) Erfinder: Balster, Frank, 48301 Nottuln (DE); Wachholder, Horst, 45277 Essen (DE)
(74) Vertreter: Zenz Patentanwälte Partnerschaft mbB

(56) Entgegenhaltungen:
- WO-A1-2013/152419
- DE-A1-102008 012 739
- DE-A1-102011 079 771
- FR-A1- 2 966 553
- US-A1- 2011 185 793

## Beschreibung

Die Erfindung betrifft eine Tragrollenwechselvorrichtung zum Wechseln einer Tragrolle eines Rollenherdofens, aufweisend: ein gegenüber der äußeren Umgebungsatmosphäre abdichtbares Gehäuse, das eine an den Rollenherdofen ankoppelbare Schleuse aufweist, über die ein Zugang unter Ausschluss der Umgebungsatmosphäre auf eine zu demontierende Tragrolle des Rollenherdofens vom Inneren des Gehäuses aus möglich ist, und wenigstens eine zum Demontieren und Montieren von Tragrollen ausgebildete Tragrollenhandhabungsvorrichtung, die in dem Gehäuse verfahrbar angeordnet ist und die zumindest teilweise durch die Schleuse hindurch aus dem Gehäuse ausfahrbar ausgebildet ist.

Ferner richtet sich die Erfindung auf eine Anordnung mit einem Rollenherdofen zum Wärmebehandeln von Bauteilen und einer zum Wechseln einer Tragrolle des Rollenherdofens ausgebildeten Tragrollenwechselvorrichtung, wobei der Rollenherdofen an seiner der Tragrollenwechselvorrichtung zugewandten Seitenwand für jede zu lagernde Tragrolle einen Lagerstutzen mit einem Flansch aufweist, und wobei die Tragrollenwechselvorrichtung ein gegenüber der äußeren Umgebungsatmosphäre abdichtbares Gehäuse, das eine an den Rollenherdofen ankoppelbare Schleuse aufweist, über die ein Zugang unter Ausschluss der Umgebungsatmosphäre auf eine zu demontierende Tragrolle des Rollenherdofens vom Inneren des Gehäuses aus möglich ist, und wenigstens eine zum Demontieren und Montieren von Tragrollen ausgebildete Tragrollenhandhabungsvorrichtung, die in dem Gehäuse verfahrbar angeordnet ist und die zumindest teilweise durch die Schleuse hindurch aus dem Gehäuse ausfahrbar ausgebildet ist, aufweist.

Schließlich richtet sich die Erfindung auf ein Verfahren zum Austausch von Tragrollen eines Rollenherdofens mittels einer Tragrollenwechselvorrichtung, wobei die Tragrollenwechselvorrichtung seitlich neben dem Rollenherdofen an die Position der zu demontierenden Tragrolle gefahren wird, die Tragrolle von einer Antriebseinheit entkoppelt wird und dann die Tragrollenwechselvorrichtung an den Rollenherdofen an die zu demontierende Tragrolle herangefahren wird, wobei eine Schleuse der Tragrollenwechselvorrichtung gasdicht an den Rollenherdofen angekoppelt wird.

Eine Tragrollenwechselvorrichtung der Eingangs bezeichneten Art ist zum Beispiel aus der DE 10 2011 079 771 A1 bekannt, wobei dieser Anmeldung auch ein Verfahren zum Tragrollenwechsel gemäß der Eingangs bezeichneten Art zu entnehmen ist. Diese bekannte Tragrollenwechselvorrichtung ist seitlich neben dem Rollenherdofen verfahrbar und weist eine eingehauste, d.h. in einem Gehäuse der Tragrollenwechselvorrichtung untergebrachte Tragrollenhandhabungsvorrichtung auf. Zum Tragrollenwechsel wird die Tragrollenwechselvorrichtung entlang der Ofenlängsachse verfahren und an der entsprechenden Wechsellage positioniert. Dann wird für den Tragrollenwechsel eine Schleuse der Tragrollenwechselvorrichtung gasdicht an den Rollenherdofen über eine Flanschverbindung angeschraubt, so dass eine gasdichte Isolation zwischen dem Inneren des Gehäuses der Tragrollenwechselvorrichtung und der Umgebung herrscht. Bei einem Tragrollenwechsel fährt eine Lanze der Tragrollenhandhabungsvorrichtung in die hohle Tragrolle ein, um die auszutauschende Tragrolle anzuheben und die Tragrolle aus einer in der Wandung des Rollenherdofens ausgebildeten Öffnung, in welcher die Tragrolle im Betrieb drehbar gelagert ist, herauszuziehen. Bei dieser Tragrollenwechselvorrichtung wird davon ausgegangen, dass die geschraubte Flanschverbindung absolute Gasdichtheit gewährleistet, ohne dass direkt nach dem Andocken der Tragrollenwechselvorrichtung an den Rollenherdofen oder auch während des Tragrollenwechsels eine Überprüfung auf Gasdichtheit der Flanschverbindung erfolgt. Zusätzlich stellt das Verschrauben zur Herstellung der Flanschverbindung einen nachteiligen Aufwand dar, der umständlich sowie zeitaufwendig ist und für den Personal eingesetzt werden muss.

Vorrichtungen zum Verbinden von Leitungen gehen aus der WO 2013/152419 A1, der DE 10 2008 012739 A1 und der US 2011/185793 A1 hervor.

Eine Vorrichtung zur Verbindung und zum Trennen von Spannmodulen ist aus der FR 2 966 553 A1 bekannt.

Der Erfindung liegt die Aufgabe zugrunde eine Lösung zu schaffen, die auf konstruktiv einfache Weise eine Tragrollenwechselvorrichtung bereitstellt, bei welcher die aus dem Stand der Technik bekannten Nachteile vermieden werden und durch die bei einem Tragrollenwechsel die Gasdichtheit der Andockverbindung zwischen der Tragrollenwechselvorrichtung und dem Rollenherdofen überprüft und überwacht werden kann.

Bei einer Tragrollenwechselvorrichtung der Eingangs bezeichneten Art wird die Aufgabe erfindungsgemäß dadurch gelöst, dass die Schleuse einen Andockflansch und ein Spannsystem aufweist, wobei das Spannsystem den Andockflansch formschlüssig an den Rollenherdofen ankoppelnd ausgebildet ist, wobei die Schleuse den Andockflansch und eine Dichtheitsüberwachung, durch welche bei an den Rollenherdofen angekoppelter Schleuse die Dichtheit der Andockverbindung überprüfbar ist, aufweist.

Ferner wird bei einer Anordnung der Eingangs bezeichneten Art, die eine Tragrollenwechselvorrichtung und einen Rollenherdofen umfasst, die Aufgabe erfindungsgemäß dadurch gelöst, dass die Schleuse einen Andockflansch und eine Dichtheitsüberwachung, durch welche bei an den Flansch des Rollenherdofens angekoppelter Schleuse die Dichtheit der Andockverbindung überprüfbar ist, aufweist, wobei die Schleuse ein Spannsystem mit wenigstens einem zwischen einer Andockposition und einer Grundposition verstellbaren Klemmelement aufweist, wobei das Klemmelement in der Andockposition den Flansch des Rollenherdofens hintergreift und in der Grundposition den Flansch freigibt.

Schließlich wird bei einem Verfahren der Eingangs bezeichneten Art die Aufgabe erfindungsgemäß dadurch gelöst, dass beim Andocken zwischen einem Flansch des Rollenherdofens und einem Andockflansch der Schleuse eine Überwachungskammer ausgebildet wird, in welche ein Drucküberwachungsfluid zur Überprüfung der Gasdichtheit der Andockverbindung eingeleitet wird.

Vorteilhafte und zweckmäßige Ausgestaltungen und Weiterbildungen der Erfindung ergeben sich aus den Unteransprüchen.

Durch die Erfindung wird auf einfache Weise eine Möglichkeit bereitgestellt, durch welche die Verbindung zwischen Tragrollenwechselvorrichtung und Rollenherdofen auf Gasdichtheit überprüft werden kann, um sicherzustellen, dass ein Wechsel einer Tragrolle unter Ausschluss der äußeren Umgebungsatmosphäre stattfindet. Die mit der Erfindung geschaffene Möglichkeit einer Überprüfung der Gasdichtheit trägt in hohem Maße zur Erhöhung der Betriebssicherheit bei einem Tragrollenwechsel bei, ohne dass beim Wechsel der Wärmebehandlungsprozess lange Zeit unterbrochen werden muss. Denn erfindungsgemäß kann zum Rollenwechsel die Temperatur des Rollenherdofens auf lediglich ca. 800°C abgesenkt werden, wodurch die Aufheizzeit zur Aufnahme der Produktion kurz gehalten werden kann. Denn üblicherweise wir bei einem manuellen Rollenwechsel der Rollenherdofen auf ca. 200°C runter geregelt, was sowohl für das Abkühlen als auch für das Aufheizen zur Produktionsaufnahme einen enorm hohen Zeitaufwand darstellt. Von einer wie erfindungsgemäß vorgesehenen Möglichkeit einer Überprüfung auf Gasdichtheit wurde im bekannten Stand der Technik bislang nicht Gebrauch gemacht noch wurde an eine solche Möglichkeit gedacht. Die mit der Erfindung geschaffene Möglichkeit einer Überprüfung der Gasdichtheit eröffnet die Option, einen Tragrollenwechsel weitestgehend automatisiert durchzuführen.

In Ausgestaltung der Tragrollenwechselvorrichtung gemäß der Erfindung sowie der erfindungsgemäßen Anordnung ist vorgesehen, dass die Dichtheitsüberwachung ein ein Überprüfungsfluid führendes Fluidzuführungselement und wenigstens zwei auf unterschiedlichen Radien des Andockflansches angeordnete Dichtelemente umfasst, wobei die wenigstens zwei Dichtelemente ringförmig ausgebildet sind und zwischen sich einen Radialspalt ausbilden, in welchen das Fluidzuführelement mündet. Mit Hilfe dieser Ausgestaltung der Tragrollenwechselvorrichtung wird dann, wenn die Tragrollenwechselvorrichtung an den Rollenherdofen angedockt ist, der Radialspalt von dem Rollenherdofen abgedeckt, so dass ein radialer Hohlraum zwischen dem Andockflansch und dem Rollenherdofen ausgebildet wird. Dieser Hohlraum wird dann zur Dichtheitsprüfung verwendet, indem ein Überprüfungsfluid über das Fluidzuführungselement in den Hohlraum bzw. Radialspalt geleitet wird und dieses Überprüfungsfluid einen Druck aufbaut, welcher bei Dichtheit konstant bleibt. Auf diese Weise kann auf einfache Weise die Gasdichtheit der Andockverbindung überprüft werden.

Dementsprechend sieht die Erfindung in Ausgestaltung der Anordnung vor, dass bei angekoppelter Schleuse an den Rollenherdofen der Radialspalt des Andockflansches und der Flansch des Rollenherdofens eine Überwachungskammer ausbilden, in welche das Fluidzuführungselement zur Überprüfung der Dichtheit der Andockverbindung das Überprüfungsfluid einleitet. Die Überwachungskammer entspricht folglich dem vorstehend beschriebenen Hohlraum, der von dem Radialspalt des Andockflansches und dem Rollenherdofen definiert sowie gebildet ist.

Um den Sitz und die Anordnung der Dichtelemente an dem Andockflansch definiert festzulegen und den Halt der Dichtelemente zu verbessern, sieht die Erfindung in Ausgestaltung der Tragrollenwechselvorrichtung vor, dass ein jeweiliges Dichtelement in einer entsprechenden Radialausnehmung, die in dem Andockflansch ausgeformt ist, angeordnet ist.

Damit während eines Tragrollenwechsels der Andockflansch auch sicher und gasdicht an dem Rollenherdofen anliegt, sieht die Erfindung vor, dass die Schleuse ein Spannsystem aufweist, wobei das Spannsystem den Andockflansch formschlüssig an den Rollenherdofen ankoppelnd ausgebildet ist. Mit Hilfe des Spannsystems kann die Schleuse an dem Rollenherdofen fixiert werden, wobei es sich um ein hydraulisch betriebenes Spannsystem handeln kann.

Eine konstruktiv besonders günstige Möglichkeit zur Realisierung einer formschlüssigen Verbindung zwischen dem Andockflansch und dem Rollenherdofen ist bei der erfindungsgemäßen Tragrollenwechselvorrichtung dadurch gegeben, dass das Spannsystem wenigstens ein zwischen einer Andockposition und einer Grundposition verstellbares Klemmelement aufweist, wobei das wenigstens eine Klemmelement in der Andockposition mit dem Rollenherdofen in Eingriff stehend und in der Grundposition mit dem Rollenherdofen außer Eingriff stehend ausgebildet ist.

Bei der Anordnung wird die formschlüssige Verbindung dann in besonderer Ausgestaltung dementsprechend dadurch gebildet, dass die Schleuse ein Spannsystem mit wenigstens einem zwischen einer Andockposition und einer Grundposition verstellbaren Klemmelement aufweist, wobei das Klemmelement in der Andockposition den Flansch des Rollenherdofens hintergreift und in der Grundposition den Flansch freigibt.

Zum Ausgleich von Toleranzen ist es von Vorteil, wenn in Ausgestaltung der Tragrollenwechselvorrichtung die Schleuse stutzenartig ausgebildet ist und einen Kompensator aufweist.

Schließlich sieht die Erfindung in Ausgestaltung des erfindungsgemäßen Verfahrens vor, dass die Gasdichtheit der Andockverbindung anhand des Druckes, der durch das eingeleitete Drucküberwachungsfluid in der Überwachungskammer bei Gasdichtheit der Andockverbindung aufgebaut wird, überprüft wird.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 in schematischer Draufsicht eine Anordnung gemäß der Erfindung mit einem Rollenherdofen und einer erfindungsgemäßen Tragrollenwechselvorrichtung, die seitlich an dem Rollenherdofen verfahrbar ausgebildet ist,
Figur 2 eine perspektivische Darstellung der an dem Rollenherdofen angedockten Tragrollenwechselvorrichtung,
Figur 3 eine perspektivische Detailansicht eines Flansches des Rollenherdofens,
Figur 4 eine perspektivische Detailansicht eines Längsendes einer Tragrolle,
Figur 5 eine perspektivische Detailansicht auf eine Schleuse der Tragrollenwechselvorrichtung bei formschlüssiger Verbindung mit dem Rollenherdofen,
Figur 6 eine perspektivische Detailansicht auf die Schleuse der Tragrollenwechselvorrichtung nach Aufhebung der formschlüssigen Verbindung mit dem Rollenherdofen,
Figur 7 eine perspektivische Schnittansicht auf die Schleuse der Tragrollenwechselvorrichtung im angedockten Zustand an den Flansch des Rollenherdofens,
Figur 8 eine weitere perspektivische Schnittansicht der Schleuse und ihres Andockflansches,
Figur 9 eine noch weitere perspektivische Schnittansicht der Schleuse und ihres Andockflansches,
Figur 10 eine Detailansicht auf einen Radialspalt des Andockflansches,
Figur 11 eine Schnittansicht in Draufsicht auf die Schleuse der Tragrollenwechselvorrichtung und den Flansch des Rollenherdofens vor Andocken der Tragrollenwechselvorrichtung und
Figur 12 eine Schnittansicht in Draufsicht auf die Schleuse der Tragrollenwechselvorrichtung und den Flansch des Rollenherdofens nach Andocken der Tragrollenwechselvorrichtung.

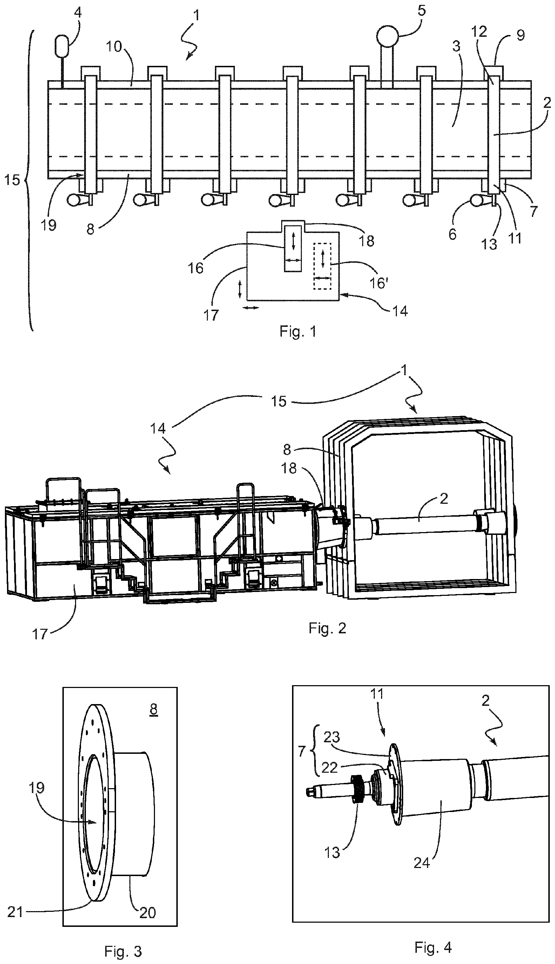

In Figur 1 ist in schematischer Draufsicht ein Rollenherdofen 1 gezeigt, bei dem die jeweiligen Tragrollen 2 mittels eines jeweiligen Tragrollenlagerungssystems drehbar gelagert sind. In dem in Figur 1 gezeigten Ausführungsbeispiel ist der Rollenherdofen 1 zum kontinuierlichen Wärmebehandeln von Stahlbändern 3 ausgebildet. Figur 1 ist eine exemplarische Darstellung und zeigt lediglich einen Ausschnitt des Rollenherdofens 1. Für diesen Ausschnitt weist der Rollenherdofen 1 sieben Tragrollen 2 auf, wobei aus Gründen der Übersichtlichkeit nur eine der sieben Tragrollen 2 mit verschiedenen Bezugszeichen versehen ist. Der Rollenherdofen 1 ist gegenüber seiner Umgebung hermetisch abgeschlossen und wird unter einer Schutzgasatmosphäre betrieben. Die Tragrollen 2 sind entlang der Längsachse des Rollenherdofens 1 angeordnet und transportieren das mit Wärme zu behandelnde Stahlband 3, wobei der Prozess bei Temperaturen von über 1000°C im Inneren des Rollenherdofens 1 stattfindet. Eine Heizvorrichtung 4 sorgt für die für den Prozess erforderliche Temperatur im Inneren des Rollenherdofens 1, wohingegen eine Schutzgasvorrichtung 5 dafür verantwortlich ist, dass sich im Inneren des Rollenherdofens 1 die gewünschte Schutzgasatmosphäre einstellt. Jede Tragrolle 2 ist außerhalb des Rollenherdofens 1 mit einer Antriebseinheit 6 verbunden, welche die jeweilige Tragrolle 2 rotierend antreibt, um das Stahlband 3 durch den Rollenherdofen 1 zu fördern. Das in den Figuren nicht im Detail dargestellte Lagerungssystem einer jeweiligen Tragrolle 2 umfasst ein erstes Lagerelement 7, welches auf einer ersten Seitenwand 8 des Rollenherdofens 1 angebracht ist und bei einem Tragrollenwechsel von der ersten Seitenwand 8 gelöst werden muss, und ein zweites Lagerelement 9, welches auf einer der ersten Seitenwand 8 gegenüberliegenden, zweiten Seitenwand 10 des Rollenherdofens 1 angebracht ist und bei einem Tragrollenwechsel von der zweiten Seitenwand 10 nicht gelöst werden muss, sondern dort zur Lagerung der neu einzusetzenden Tragrolle 2 verbleibt. Bei dem Lagerungssystem ist eine jeweilige Tragrolle 2 mit ihrem ersten Längsende 11 mittels des ersten Lagerelements 7 und mit ihrem zweiten Längsende 12 mittels des zweiten Lagerelements 9 drehbar im Rollenherdofen 1 gelagert, wobei das erste Lagerelement 7 und das zweite Lagerelement 9 derart gasdicht ausgebildet sind, dass während des Ofenbetriebs kein Schutzgas aus dem Inneren des Rollenherdofens 1 entweichen kann. Von dem ersten Längsende 11 einer jeweiligen Tragrolle 2 aus erstreckt sich ein Wellenzapfen 13, der aus dem jeweiligen ersten Lagerelement 7 nach außen hin hervorsteht und mit der zugeordneten Antriebseinheit 6 antriebsverbunden ist, durch die eine jeweilige Tragrolle 2 im Betrieb des Rollenherdofens 1 gedreht wird. Bei einem Wechsel einer Tragrolle 2 wird zunächst die Antriebseinheit 6 von dem Wellenzapfen 13 gelöst, bevor dann die zu demontierende Tragrolle 2 mitsamt dem ersten Lagerelement 7 vom Rollenherdofen 1 entfernt wird, wohingegen das zweite Lagerelement 9 am Rollenherdofen 1 verbleibt und auch die neu einzusetzende Tragrolle 2 drehbar lagert.

Wie Figur 1 ferner schematisch zeigt, ist seitlich vom Rollenherdofen 1 eine Tragrollenwechselvorrichtung 14 zum Wechseln einer Tragrolle 2 des Rollenherdofens 1 angeordnet, die entlang der ersten Seitenwand 8 des Rollenherdofens 1 und zur Seitenwand 8 hin und von dieser weg verfahrbar ausgebildet ist, um vor einer zu demontierenden Tragrolle 2 positioniert zu werden. Die Tragrollenwechselvorrichtung 14 und der Rollenherdofen 1 bilden eine Anordnung 15, die zum Wechseln einer Tragrolle 2 bestimmt ist. Zum Tragrollenwechsel wird das erste Lagerelement 7 von der ersten Seitenwand 8 gelöst und die auszuwechselnde Tragrolle 2 mitsamt dem ersten Lagerelement 7 mit Hilfe einer Tragrollenhandhabungsvorrichtung 16 der Tragrollenwechselvorrichtung 14 aus dem Rollenherdofen 1 gezogen. Die Tragrollenwechselvorrichtung 14 umfasst neben der Tragrollenhandhabungsvorrichtung 16 ein gegenüber der äußeren Umgebungsatmosphäre abdichtbares Gehäuse 17, das eine zum Ankoppeln an den Rollenherdofen 1 dienende Schleuse 18 aufweist, über die ein Zugang unter Ausschluss der Umgebungsatmosphäre auf eine zu demontierende Tragrolle 2 von dem Gehäuse 17 aus möglich ist. Die Tragrollenhandhabungsvorrichtung 16 ist in dem Gehäuse 17 derart verfahrbar angeordnet, dass sie zu der Seitenwand 8 hin und von dieser weg sowie seitlich zur Seitenwand 8 bewegbar ist. Dabei kann eine einzige Tragrollenhandhabungsvorrichtung 16 sowohl zur Demontage einer Tragrolle 2 vom Rollenherdofen 1 als auch zur Montage einer neuen Tragrolle 2 eingesetzt werden. Denkbar ist es auch, dass eine Tragrollenhandhabungsvorrichtung 16 zur Demontage eingesetzt wird und anschließend vom Ofen wegbewegt wird, wonach zur Montage eine weitere Tragrollenhandhabungsvorrichtung 16' verwendet wird, die mit einer zu montierenden Tragrolle 2 bestückt ist, was in Figur 1 schematisch angedeutet ist. Dabei sind die beiden Tragrollenhandhabungsvorrichtungen 16 und 16' innerhalb des gasdichten Gehäuses 17 verfahrbar, vor der Schleuse 18 positionierbar sowie zumindest teilweise durch die Schleuse 18 hindurch aus dem Gehäuse 17 ausfahrbar ausgebildet. Ein solcher Tragrollenwechsel kann somit mit einer oder zwei Tragrollenhandhabungsvorrichtungen 16, 16' erfolgen, wobei der Rollenherdofen 1 vor dem Tragrollenwechsel auf ca. 800°C abgekühlt und mit Stickstoff gespült wird.

Um den Wechsel einer Tragrolle zeitlich kurz zu halten und damit die Stillstandzeit zu minimieren, wird der Tragrollenwechsel seitlich des Rollenherdofens 1 durchgeführt, wobei der Betrieb der Tragrollenhandhabungsvorrichtung 16, 16' gegenüber der äußeren Umgebungsatmosphäre abgeschirmt erfolgt. Dementsprechend wird die eine oder werden die beiden Tragrollenhandhabungsvorrichtungen 16, 16' in dem gegenüber der äußeren Umgebungsatmosphäre abgedichteten Gehäuse 17 betrieben. In einem solchen Gehäuse 17 sind dann die eine einzige oder die beiden Tragrollenhandhabungsvorrichtungen 16, 16' verfahrbar angeordnet und untergebracht. Bei einem Tragrollenwechsel mit einem solchen gasdichten Gehäuse 17, welches gegenüber der äußeren Umgebung hermetisch abgedichtet ist, wird vor dem eigentlichen Tragerollenwechsel die Antriebseinheit 6 von dem Wellenzapfen 13 der Tragrolle 2 entfernt. Durch die Schleuse 18 ist das Gehäuse 17 abgedichtet gegenüber der äußeren Atmosphäre bzw. Umgebung an den Rollenherdofen 1 andockbar bzw. ankoppelbar, wie es in Figur 2 gezeigt ist. Dabei umschließt die Schleuse 18 das erste Lagerelement 7, welches zusammen mit der zu demontierenden Tragrolle 2 aus dem Rollenherdofen 1 dann herausgezogen wird. Mit anderen Worten ist die eine oder sind die beiden Tragrollenhandhabungsvorrichtungen 16, 16' in dem gegenüber der äußeren Umgebung abgedichteten Gehäuse 17 verfahrbar angeordnet und wenigstens zum Teil durch die Schleuse 18 in der Wandung des Gehäuses 17 aus diesem ausfahrbar, um Zugriff auf die zu demontierende Tragrolle 2 zu haben. Nach dem Andocken bzw. Ankoppeln des Gehäuses 17 an dem Rollenherdofen 1, wie es in Figur 2 dargestellt ist, wird in dem Gehäuse 17 selbst auch eine Schutzgasatmosphäre eingestellt, die der Schutzgasatmosphäre des Inneren des Rollenherdofens 1 entspricht. Bei Unterbringung in dem Gehäuse 17 kann die Tragrollenhandhabungsvorrichtung 16 oder können die beiden Tragrollenhandhabungsvorrichtungen 16, 16' innerhalb des Gehäuses 17 wenigstens in zwei Raumrichtungen verfahrbar sein, was durch die Pfeile in Figur 1 angedeutet ist. Zusätzlich ist das Gehäuse 17 bzw. die Tragrollenwechselvorrichtung 14 in wenigstens zwei Raumrichtungen verfahrbar, um seitlich an die gewünschte Tragrolle 2 heranzufahren und um zum Andocken sich der ersten Seitenwand 8 zu nähern.

Die auszuwechselnde Tragrolle 2 wird beim Tragrollenwechsel aus einer Öffnung 19 (siehe beispielsweise Figur 1 oder 3) aus der ersten Seitenwand 8 des Rollenherdofens 1 herausgezogen. Genauer gesagt weist der Rollenherdofen 1 an seiner ersten Seitenwand 8 für jede Tragrolle 2 einen Stutzen bzw. Lagerstutzen 20 mit einem Flansch 21 auf, wobei eine jeweilige Tragrolle 2 mit ihrem zweiten Längsende 12 durch die Öffnung 19 des Stutzens 20 hindurch in den Rollenherdofen 1 eingebracht und mit ihrem ersten Längsende 11 an dem Flansch 21 befestigt ist (siehe zum Beispiel Figur 3). Stutzen 20 und Flansch 21 des Rollenherdofens 1 sind lediglich in Figur 3, nicht aber in der schematischen Darstellung der Figur 1 gezeigt. Mit Bezug auf Figur 4 umfasst das erste Lagerelement 7 einer jeweiligen Tragrolle 2 ein Lagergehäuse 22, in welchem ein Festlager zur drehbaren Lagerung des ersten Längsendes 11 der Tragrolle 2 aufgenommen ist, und eine Lagerzwischenplatte 23, auf der das Lagergehäuse 22 sitzt. Über die Lagerzwischenplatte 23 ist das Lagergehäuse 22 über den Flansch bzw. Gehäuseflansch 21 an der ersten Seitenwand 8 des Rollenherdofens 1 angebracht, wobei die Tragrollen 2 jeweils einen Isolierstopfen 24 aufweisen, der in der ersten Seitenwand 8 des Rollenherdofens 2 bei eingebauter Tragrolle 2 angeordnet ist, so dass die Tragrolle 2 mittels des ersten Lageelements 7 gasdicht an der ersten Seitenwand 8 des Rollenherdofens 1 drehbar gelagert ist. Wenn eine Tragrolle 2 auszutauschen ist, so wird die Verschraubung zwischen Lagerzwischenplatte 23 und Gehäuseflansch 21 gelöst und das erste Lagerelement 7 zusammen mit der Tragrolle 2 und dem Isolierstopfen 24 demontiert und vom Rollenherdofen 1 weg transportiert.

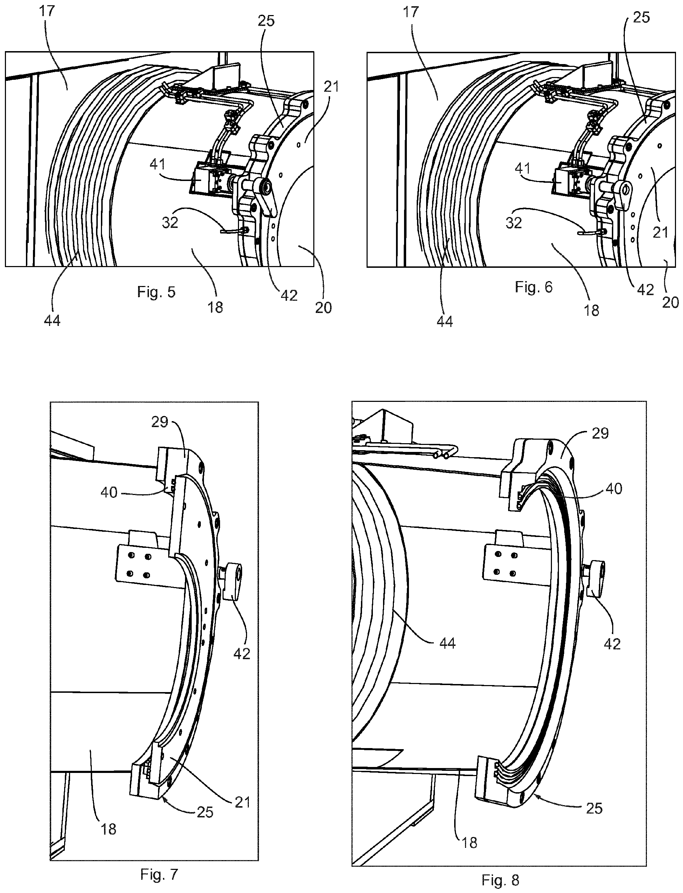

Beim Herausziehen der auszutauschenden Tragrolle 2 und beim Einsetzen einer neuen Tragrolle 2 ist darauf zu achten, dass der Tragrollenwechsel gasdicht erfolgt und keine Umgebungsluft in das Innere des Rollenherdofens 1 eintritt. Wie vorstehend bereist angemerkt, dichtet im montierten Zustand der Tragrolle 2 die Lagerzwischenplatte 23 an dem Gehäuseflansch 21 ab. Darüber hinaus hat die Lagerzwischenplatte 23 die wichtige Funktion, die Gasdichtheit während der Vorbereitungen zur Demontage der Tragrolle 2 zu gewährleisten. Denn in einem ersten Schritt der Demontage wird die Antriebseinheit 6 von dem Wellenzapfen 13 entfernt, damit die Tragrollenhandhabungsvorrichtung 16 an die zu demontierende Tragrolle 2 heranfahren kann. Wenn ein Austausch unter absoluter Gasdichtheit, d.h. unter Ausschluss der äußeren Umgebungsatmosphäre, gefordert ist, dann wird die Tragrollenwechselvorrichtung 14 mit der in dem gasdichten Gehäuse 17 angeordneten Tragrollenhandhabungsvorrichtung 16 derart an den Rollenherdofen 1 herangefahren und positioniert, dass die rüsselförmige Schleuse 18 über die Lagerzwischenplatte 23 geschoben ist und auf dem Gehäuseflansch bzw. Flansch 21 dichtend anliegt. Diese Position ist in den Figuren 5 bis 7 und 12 gezeigt.

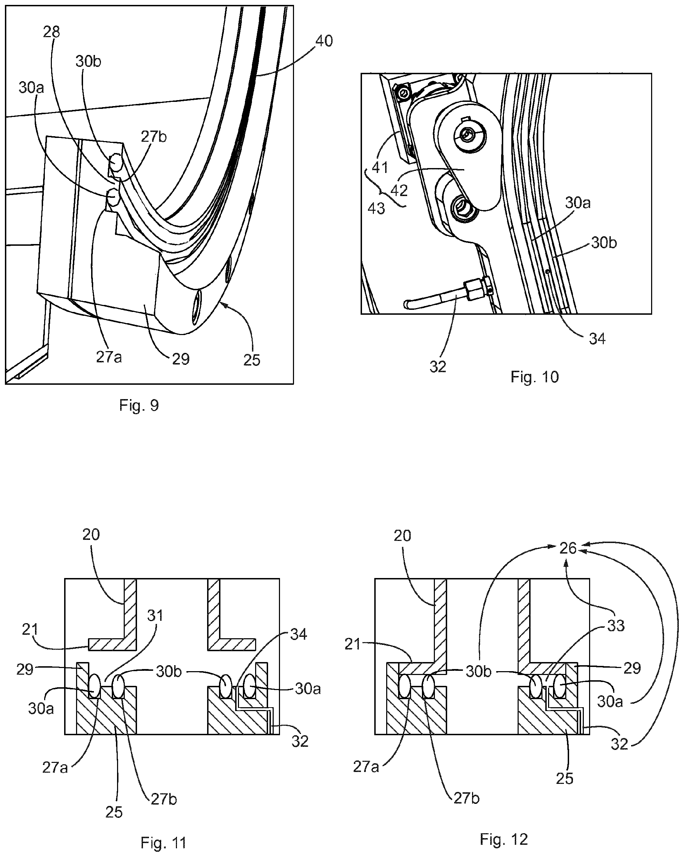

Nachstehend wird Bezug auf die Figuren 5 bis 12 genommen, in denen eine Möglichkeit dargestellt ist, um die Gasdichtheit der Andockverbindung zu überwachen. Damit überprüft werden kann, ob die Schleuse 18 der Tragrollenwechselvorrichtung 14 auch tatsächlich gasdicht an dem Flansch 21 des Rollenherdofens 1 angedockt ist, ist gemäß der vorliegenden Erfindung vorgesehen, dass die Schleuse 18 einen Andockflansch 25 und eine Dichtheitsüberwachung 26 aufweist. Mit Hilfe der Dichtheitsüberwachung 26 ist bei an den Rollenherdofen 1 angekoppelter Schleuse 18 die Dichtheit der Andockverbindung überprüfbar. Die Andockfläche des Andockflansches 25 ist mit einem vorstehenden, gestuften Umfangsrand 29 ausgebildet, so dass der Umfangsrand 29 den Flansch 21 des Rollenherdofens 1 in der Andockposition umgibt bzw. aufnimmt. Der Andockflansch 25 weist ferner zwei Nuten (siehe zum Beispiel Figuren 8 bis 12) für jeweilige O-Ringdichtungen auf. Die beiden Nuten, die umlaufend in der zurückversetzt zu dem Umfangsrand 29 angeordneten Flanschfläche 40 (siehe zum Beispiel Figur 9) des Andockflanschs 25 auf unterschiedlichen Radien ausgebildet sind, bilden jeweilige Radialausnehmungen 27a und 27b, die wiederum zwischen sich einen Steg 28 (siehe zum Beispiel Figur 9) ausbilden. In die Radialausnehmungen 27a, 27b sind als jeweilige O-Ringdichtungen ausgeführte Dichtelemente 30a, 30b eingesetzt. Folglich ist ein jeweiliges Dichtelement 30a, 30b in einer entsprechenden Radialausnehmung 27a, 27b, die in dem Andockflansch 25 ausgeformt ist, angeordnet. Wenn nun der Andockflansch 25 der Tragrollenwechselvorrichtung 14 an den Flansch 21 des Rollenherdofens 1 andockt, dann drückt die Flanschfläche des Flansches 21 gegen die Dichtelemente 30a, 30b, wie es beispielsweise in Figur 7 und in Figur 12 gezeigt ist. In dieser Stellung ist zwischen dem Flansch 21 des Rollenherdofens 1 und dem Andockflansch 25 der Schleuse 18 mit seinen Dichtelementen 30a, 30b ein Radialspalt 31 ausgebildet (siehe zum Beispiel Figur 11), in den bei angedockter Maschine ein Überprüfungsfluid (beispielsweise Stickstoff) eingeblasen wird. Anhand des Einblasens bzw. Einleitens des Überprüfungsfluids kann die Andockverbindung auf Dichtheit anhand der Druckhaltung über der Zeit überprüft werden.

Zum Einblasen des Überprüfungsfluids bzw. von Stickstoff umfasst die Dichtheitsüberwachung 26 ein das Überprüfungsfluid führendes Fluidzuführungselement 32 und die zwei auf unterschiedlichen Radien des Andockflansches 25 angeordneten Dichtelemente 30a, 30b. Das Fluidzuführungselement 32 ist außerhalb der Schleuse 18 als Leitung ausgebildet (siehe Figuren 5 und 6) und verläuft außen an der stutzenartig ausgebildeten Schleuse 18 bis zu dem Andockflansch 25, wo die Leitung bzw. das Fluidzuführungselement 32 radial einwärts innerhalb des Andockflansches 25 verläuft und in dem besagten Radialspalt 31 zwischen den beiden Dichtelementen 30a, 30b mündet. In Figur 10 entspricht die Öffnung 34 zwischen den beiden Dichtelementen 30a, 30b der Mündung des Fluidzuführungselements 32.

Bei angekoppelter Schleuse 18 an den Rollenherdofen 1 bildet der Radialspalt 31 des Andockflansches 25 und der Flansch 21 des Rollenherdofens 1 eine der Dichtheitsüberwachung 26 (siehe zum Beispiel Figur 12) zuzuordnende Überwachungskammer 33 aus, wohingegen in der Stellung, die in Figur 11 gezeigt ist und in welcher der Andockflansch 25 noch nicht vollständig an den Flansch 21 herangefahren ist und angedockt hat, die Überwachungskammer 33 zur Seite des Flanschs 21 hin offen ist. In angedockter Stellung leitet das Fluidzuführungselement 32 zur Überprüfung der Dichtheit der Andockverbindung das Überprüfungsfluid (zum Beispiel Stickstoff) in die Überwachungskammer 33 ein. Dabei wird die Gasdichtheit der Andockverbindung anhand des Druckes, der durch das eingeleitete Drucküberwachungsfluid in der Überwachungskammer 33 bei Gasdichtheit der Andockverbindung aufgebaut wird, überprüft.

Um den Andockflansch 25 dicht an die Seitenwand 8 des Ofens 1 heran zu ziehen, weist der Andockflansch 25 ferner zwei Hydraulikspannzylinder 41 auf, die hinter den Flansch 21 des Rollenherdofens 1 greifen, wie es zum Beispiel in Figur 5 gezeigt ist. Mit anderen Worten weist die Schleuse 18 ein Spannsystem 43 auf, das den Andockflansch 25 formschlüssig an den Rollenherdofen 1 ankoppelnd ausgebildet ist. Dabei weist das Spannsystem 43 pro Hydraulikzylinder 41 ein zwischen der Andockposition (siehe Figur 5) und einer Grundposition (siehe Figur 6) verstellbares Klemmelement 42 auf. Ein jeweiliges Klemmelement 42 ist in der Andockposition mit dem Rollenherdofen 1 in Eingriff stehend und in der Grundposition mit dem Rollenherdofen 1 außer Eingriff stehend ausgebildet. Figur 6 zeigt die Grundposition der Klemmelemente 42, die in dieser Position radial nach außen verschwenkt sind, so dass der Umfangsrand 29 des Andockflanschs 25 den Flansch 21 aufnehmen kann. Sobald der Flansch 21 dann aufgenommen ist, sorgen die Hydraulikspannzylinder 41 dafür, dass die Klemmelemente 42 radial einwärts geschwenkt werden, wodurch die Klemmelemente 42 den Flansch 21 des Rollenherdofens 1 hintergreifen. Die Klemmelemente 42 sind folglich in radialer Richtung in Bezug auf den Andockflansch 25 schwenkbar an der Schleuse 18 gelagert. Dementsprechend weist bei der Anordnung 15 aus Rollenherdofen 1 und Tragrollenwechselvorrichtung 14 die Schleuse 18 das Spannsystem 43 mit den zwischen der Andockposition und der Grundposition verstellbaren Klemmelementen 42 auf, wobei die Klemmelemente in der Andockposition (siehe zum Beispiel Figur 5) den Flansch 21 des Rollenherdofens 1 hintergreifen und in der Grundposition (siehe zum Beispiel Figur 6) den Flansch 21 freigeben.

Zum Ausgleich von beispielsweise thermisch bedingten Längenänderungen weist die Schleuse 18, die stutzenartig ausgebildet ist, einen Kompensator 44 auf, der bekannter Weise ein flexibles Element zum Ausgleich von Bewegungen in Rohrleitungen ist.

Zusammenfassend ist vorstehend die erfindungsgemäße Tragrollenwechselvorrichtung 14 zum Wechseln einer Tragrolle 2 eines Rollenherdofens 1 beschrieben worden. Diese Tragrollenwechselvorrichtung 14 umfasst das gegenüber der äußeren Umgebungsatmosphäre abdichtbare Gehäuse 17 und die wenigstens eine zum Demontieren und Montieren von Tragrollen 2 ausgebildete Tragrollenhandhabungsvorrichtung 16, 16'. Das Gehäuse 17 weist die an den Rollenherdofen 1 ankoppelbare Schleuse 18 auf, über die ein Zugang unter Ausschluss der Umgebungsatmosphäre auf eine zu demontierende Tragrolle 2 des Rollenherdofens 1 vom Inneren des Gehäuses 17 aus möglich ist. Ferner ist die wenigstens eine Tragrollenhandhabungsvorrichtung 16, 16' in dem Gehäuse 17 verfahrbar angeordnet und zumindest teilweise durch die Schleuse 18 hindurch aus dem Gehäuse 17 ausfahrbar ausgebildet. Die Schleuse 18 weist den Andockflansch 25 und die Dichtheitsüberwachung 26 auf, durch welche bei an den Rollenherdofen 1 angekoppelter Schleuse 18 die Dichtheit der Andockverbindung überprüfbar ist. Damit die erfindungsgemäße Tragrollenwechselvorrichtung 14 dicht an den Flansch 21 des Rollenherdofens 1 anschließen kann, wurde die Flanschfläche des Andockflansches 25 mit einer doppelten O-Ringdichtung 30a, 30b versehen. Der Zwischenraum zwischen diesen Dichtungen wird mit Stickstoff gefüllt und auf Dichtheit geprüft. Dies erfolgt über die Druckhaltung über eine gewisse Zeitspanne.

Ferner ist vorstehend eine erfindungsgemäße Anordnung 15 mit dem Rollenherdofen 1 zum Wärmebehandeln von Bauteilen 3 und der zum Wechseln einer Tragrolle 2 des Rollenherdofens 1 ausgebildeten Tragrollenwechselvorrichtung 14 beschrieben worden, wobei der Rollenherdofen 1 an der Tragrollenwechselvorrichtung 14 zugewandten Seitenwand für jede zu lagernde Tragrolle 2 den Lagerstutzen 20 mit dem Flansch 21 aufweist. Ferner weist die Tragrollenwechselvorrichtung 14 das gegenüber der äußeren Umgebungsatmosphäre abdichtbare Gehäuse 17 auf, das die an den Rollenherdofen 1 ankoppelbare Schleuse 18 umfasst, über die ein Zugang unter Ausschluss der Umgebungsatmosphäre auf eine zu demontierende Tragrolle 2 des Rollenherdofens 1 vom Inneren des Gehäuses 17 aus möglich ist. Die wenigstens eine zum Demontieren und Montieren von Tragrollen 2 ausgebildete Tragrollenhandhabungsvorrichtung 16, 16' ist in dem Gehäuse 17 verfahrbar angeordnet und zumindest teilweise durch die Schleuse 18 hindurch aus dem Gehäuse 17 ausfahrbar ausgebildet. Insbesondere weist die Schleuse 18 den Andockflansch 25 und die Dichtheitsüberwachung 26 auf, durch die bei an den Flansch 21 des Rollenherdofens 1 angekoppelter Schleuse 18 die Dichtheit der Andockverbindung überprüfbar ist.

Schließlich lässt sich mit der vorstehend beschriebenen Anordnung das erfindungsgemäße Verfahren zum Austausch von Tragrollen 2 eines Rollenherdofens 1 mittels der Tragrollenwechselvorrichtung 14 durchführen, wobei die Tragrollenwechselvorrichtung 14 seitlich neben dem Rollenherdofen 1 an die Position der zu demontierenden Tragrolle 2 gefahren wird, die Tragrolle 2 von der Antriebseinheit 6 entkoppelt wird und dann die Tragrollenwechselvorrichtung 14 an den Rollenherdofen 1 an die zu demontierende Tragrolle 2 herangefahren wird, wobei die Schleuse 18 der Tragrollenwechselvorrichtung 14 gasdicht an den Rollenherdofen 1 angekoppelt wird. Beim Andocken wird dann erfindungsgemäß zwischen dem Flansch 21 des Rollenherdofens 1 und dem Andockflansch 25 der Schleuse 18 die Überwachungskammer 33 ausgebildet, in welche ein Drucküberwachungsfluid zur Überprüfung der Gasdichtheit der Andockverbindung eingeleitet wird.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Tragrollenwechselvorrichtung (14) zum Wechseln einer Tragrolle (2) eines Rollenherdofens (1), aufweisend:
ein gegenüber der äußeren Umgebungsatmosphäre abdichtbares Gehäuse (17), das eine an den Rollenherdofen (1) ankoppelbare Schleuse (18) aufweist, über die ein Zugang unter Ausschluss der Umgebungsatmosphäre auf eine zu demontierende Tragrolle (2) des Rollenherdofens (1) vom Inneren des Gehäuses (17) aus möglich ist, und
wenigstens eine zum Demontieren und Montieren von Tragrollen (2) ausgebildete Tragrollenhandhabungsvorrichtung (16, 16'), die in dem Gehäuse (17) verfahrbar angeordnet ist und die zumindest teilweise durch die Schleuse (18) hindurch aus dem Gehäuse (17) ausfahrbar ausgebildet ist,
**dadurch gekennzeichnet, dass**
die Schleuse (18) einen Andockflansch (25) und ein Spannsystem (43) aufweist, wobei das Spannsystem (43) den Andockflansch (25) formschlüssig an den Rollenherdofen (1) ankoppelnd ausgebildet ist, wobei
die Schleuse (18) den Andockflansch (25) und eine Dichtheitsüberwachung (26), durch welche bei an den Rollenherdofen (1) angekoppelter Schleuse (18) die Dichtheit der Andockverbindung überprüfbar ist, aufweist.

2. Tragrollenwechselvorrichtung (14) nach Anspruch 1,
**dadurch gekennzeichnet, dass** die Dichtheitsüberwachung (26) ein ein Überprüfungsfluid führendes Fluidzuführungselement (32) und wenigstens zwei auf unterschiedlichen Radien des Andockflansches (25) angeordnete Dichtelemente (30a, 30b) umfasst, wobei die wenigstens zwei Dichtelemente (30a, 30b) ringförmig ausgebildet sind und zwischen sich einen Radialspalt (31) ausbilden, in welchen das Fluidzuführelement (32) mündet.

3. Tragrollenwechselvorrichtung (14) nach Anspruch 2,
**dadurch gekennzeichnet, dass** ein jeweiliges Dichtelement (30a, 30b) in einer entsprechenden Radialausnehmung (27a, 27b), die in dem Andockflansch (25) ausgeformt ist, angeordnet ist.

4. Tragrollenwechselvorrichtung (14) nach einem der vorhergehenden Ansprüche, **dadurch gekennzeichnet, dass** das Spannsystem (43) wenigstens ein zwischen einer Andockposition und einer Grundposition verstellbares Klemmelement (42) aufweist, wobei das wenigstens eine Klemmelement (42) in der Andockposition mit dem Rollenherdofen (1) in Eingriff stehend und in der Grundposition mit dem Rollenherdofen (1) außer Eingriff stehend ausgebildet ist.

5. Tragrollenwechselvorrichtung (14) nach einem der vorhergehenden Ansprüche, **dadurch gekennzeichnet, dass** die Schleuse (18) stutzenartig ausgebildet ist und einen Kompensator (44) aufweist.

6. Anordnung (15) mit einem Rollenherdofen (1) zum Wärmebehandeln von Bauteilen (3) und einer zum Wechseln einer Tragrolle (2) des Rollenherdofens (1) ausgebildeten Tragrollenwechselvorrichtung (14) gemäß Anspruch 1, wobei der Rollenherdofen (1) an seiner der Tragrollenwechselvorrichtung (14) zugewandten Seitenwand für jede zu lagernde Tragrolle (2) einen Lagerstutzen (20) mit einem Flansch (21) aufweist.

7. Anordnung (15) nach Anspruch 6, **dadurch gekennzeichnet, dass** die Dichtheitsüberwachung (26) ein ein Überprüfungsfluid führendes Fluidzuführungselement (32) und wenigstens zwei auf unterschiedlichen Radien des Andockflansches (25) angeordnete Dichtelemente (30a, 30b) umfasst, wobei die wenigstens zwei Dichtelemente (30a, 30b) ringförmig ausgebildet sind und zwischen sich einen Radialspalt (31) ausbilden, in welchen das Fluidzuführelement (32) mündet.

8. Anordnung (15) nach Anspruch 7, **dadurch gekennzeichnet, dass** bei angekoppelter Schleuse (18) an den Rollenherdofen (1) der Radialspalt (31) des Andockflansches (25) und der Flansch (21) des Rollenherdofens (1) eine Überwachungskammer (33) ausbilden, in welche das Fluidzuführungselement (32) zur Überprüfung der Dichtheit der Andockverbindung das Überprüfungsfluid einleitet.

9. Verfahren zum Austausch von Tragrollen (2) eines Rollenherdofens (1) mittels einer Tragrollenwechselvorrichtung (14), wobei die Tragrollenwechselvorrichtung (14) seitlich neben dem Rollenherdofen (1) an die Position der zu demontierenden Tragrolle (2) gefahren wird, die Tragrolle (2) von einer Antriebseinheit (6) entkoppelt wird und dann die Tragrollenwechselvorrichtung (14) an den Rollenherdofen (1) an die zu demontierende Tragrolle (2) herangefahren wird, wobei eine Schleuse (18) der Tragrollenwechselvorrichtung (14) gasdicht an den Rollenherdofen (1) angekoppelt wird,
**dadurch gekennzeichnet, dass**
beim Andocken zwischen einem Flansch (21) des Rollenherdofens (1) und einem Andockflansch (25) der Schleuse (18) eine Überwachungskammer (33) ausgebildet wird, in welche ein Drucküberwachungsfluid zur Überprüfung der Gasdichtheit der Andockverbindung eingeleitet wird.

10. Verfahren nach Anspruch 9, **dadurch gekennzeichnet, dass** die Gasdichtheit der Andockverbindung anhand des Druckes, der durch das eingeleitete Drucküberwachungsfluid in der Überwachungskammer (33) bei Gasdichtheit der Andockverbindung aufgebaut wird, überprüft wird.

## Claims

1. Support roller exchange device (14) to change a support roller (2) of a roller hearth furnace (1), having:
a housing (17) that can be sealed from the outer ambient atmosphere that has an air lock (18) that can be connected to the roller hearth furnace (1), via which, access to a support roller (2) of the roller hearth furnace (1) to be demounted is possible from the interior space of the housing (17) under the exclusion of the ambient atmosphere, and
at least one support roller handling apparatus (16, 16') for mounting and demounting support rollers (2), which is arranged to be moveable within the housing (17) and which is designed to be at least partially extended out of the housing (17) through the air lock (18),
**characterized in that**
the air lock (18) has a docking flange (25) and a tensioning system (43), wherein the tensioning system (43) is designed to be coupled with docking flange (25) to the roller hearth furnace (1) in an interlocking manner, wherein
the air lock (18) has the docking flange (25) and a leak monitoring system (26), by means of which the docking connection can be checked for leaks when the air lock (18) is coupled with the roller hearth furnace (1).

2. Support roller exchange device (14) according to Claim 1, **characterized in that** the leak monitoring system (26) comprises a fluid-supply element carrying test fluid (32) and at least two sealing elements (30a, 30b) situated on different radii of the docking flange (25), wherein the at least two sealing elements (30a, 30b) are ring-shaped and form a radial gap (31) between themselves, into which the fluid-supply element (32) leads into.

3. Support roller exchange device (14) according to Claim 2, **characterized in that** a respective sealing element (30a, 30b) is arranged within a corresponding radial recess (27a, 27b), which is formed within the docking flange (25).

4. Support roller exchange device (14) according to any one of the preceding claims, **characterized in that** the tensioning system (43) has at least one adjustable clamping element (42) located between a docking position and a home position, wherein the at least one clamping element (42) is designed to interlock with the roller hearth furnace (1) not interlock with the roller hearth furnace (1) in the home position.

5. Support roller exchange device (14) according to any one of the preceding claims, **characterized in that** the air lock (18) is designed to be nozzle-shaped and has a compensator (44).

6. Arrangement (15) with a roller hearth furnace (1) for the heat treatment of components (3) and support roller exchange device (14) designed to change a support roller (2) of a roller hearth furnace (1) in accordance with Claim 1, wherein the roller hearth furnace (1) has a bearing support (20) for each support roller (2) to be stored along with a flange (21) on its side wall facing the support roller exchange device (14).

7. Arrangement (15) according to Claim 6, **characterized in that** the leak monitoring system (26) comprises a fluid-supply element carrying test fluid (32) and at least two sealing elements (30a, 30b) situated on different radii of the docking flange (25), wherein the at least two sealing elements (30a, 30b) are ring-shaped and form a radial gap (31) between themselves, into which the fluid-supply element (32) leads into.

8. Arrangement (15) according to Claim 7, **characterized in that**, when the air lock is coupled (18) to the roller hearth furnace (1), the radial gap (31) of the docking flange (25) and the flange (21) of the roller hearth furnace (1) form a monitoring chamber (33), in which the fluid-supply element (32) introduces the testing fluid in order to check the docking connection for leaks.

9. Method to exchange support rollers (2) of a roller hearth furnace (1) by means of a support roller exchange device (14), wherein the support roller exchange device (14) is moved on the side adjacent to the roller hearth furnace (1) to the position of the support roller to be demounted (2), the support roller (2) of a drive unit (6) is decoupled and then, the support roller exchange device (14) is moved to the roller hearth furnace (1) toward the support roller to be demounted (2), whereby an air lock (18), which is part of the support roller exchange device (14), is coupled with the roller hearth furnace (1) in an airtight manner,
**characterized in that**,
when docking takes place between a flange (21) of the roller hearth furnace (1) and a docking flange (25) of the air lock (18), a monitoring chamber is formed (33), in which a pressure monitoring fluid is introduced to check the docking connection for gas leaks.

10. Method according to Claim 9, **characterized in that** the docking connection is checked for gas leaks by means of the pressure that is built up by the pressure monitoring fluid being introduced into the monitoring chamber (33) if there are no gas leaks in the docking connection.

## Revendications

1. Dispositif de changement de rouleau porteur (14) pour changer un rouleau porteur (2) d'un four à rouleaux (1), comportant :
un boîtier (17) pouvant être étanchéifié par rapport à l'atmosphère ambiante extérieure, qui comporte un sas (18) pouvant être couplé au four à rouleaux (1), par le biais duquel un accès de l'intérieur du boîtier (17) est possible à un rouleau porteur (2) du four à rouleaux (1) hors la présence de l'atmosphère ambiant, et
au moins un dispositif de manutention de rouleau porteur (16, 16') constitué pour le démontage et le montage de rouleaux porteurs (2), qui est disposé pouvant être déplacé dans le boîtier (17) et qui est constitué pouvant être sorti au moins en partie du boîtier (17) à travers le sas (18),
**caractérisé en ce que**
le sas (18) comporte une bride d'accostage (25) et un système de serrage (43), le système de serrage (43) étant constitué accouplant la bride d'accostage (25) au four à rouleaux (1) par conformité de forme,
le sas (18) comportant la bride d'accostage (25) et un contrôle d'étanchéité (26) à travers lequel il est possible de vérifier l'étanchéité de la liaison d'accostage lorsque le sas (18) est accouplé au four à rouleaux (1).

2. Dispositif de changement de rouleau porteur (14) selon la revendication 1, **caractérisé en ce que** le contrôle d'étanchéité (26) comprend un élément d'alimentation en fluide (32) véhiculant un fluide de contrôle et au moins deux éléments d'étanchéité (30a, 30b) disposés sur des rayons différents de la bride d'accostage (25), au moins les deux éléments d'étanchéité (30a, 30b) étant constitués de forme annulaire et constituant entre eux un interstice radial (31) dans lequel débouche l'élément d'alimentation de fluide (32).

3. Dispositif de changement de rouleau porteur (14) selon la revendication 2, **caractérisé en ce qu'**un élément d'étanchéité (30a, 30b) respectif est disposé dans un évidement radial (27a, 27b) correspondant, qui est conformé dans la bride d'accostage (25).

4. Dispositif de changement de rouleau porteur (14) selon l'une quelconque des revendications précédentes, **caractérisé en ce que** le système de serrage (43) comporte au moins un élément de serrage (42) réglable entre une position d'accostage et une position de base, au moins un élément de serrage (42) étant en prise avec le four à rouleaux (1) dans la position d'accostage et étant constitué hors de prise avec le four à rouleaux (1) dans la position de base.

5. Dispositif de changement de rouleau porteur (14) selon l'une quelconque des revendications précédentes, **caractérisé en ce que** le sas (18) est constitué de type tubulure et comporte un compensateur (44).

6. Agencement (15) avec un four à rouleaux (1) pour le traitement thermique de composants (3) et un dispositif de changement de rouleau porteur (14) constitué pour le changement d'un rouleau porteur (2) du four à rouleaux (1) selon la revendication 1, le four à rouleaux (1) comportant sur sa paroi latérale tournée vers le dispositif de changement de rouleau porteur (14) une tubulure de support (20) avec une bride (21) pour chaque rouleau porteur (2) à loger.

7. Agencement (15) selon la revendication 6, **caractérisé en ce que** le contrôle d'étanchéité (26) comprend un élément d'alimentation de fluide (32) véhiculant un fluide de contrôle et au moins deux éléments d'étanchéité (30a, 30b) disposés sur des rayons différents de la bride d'accostage (25), au moins les deux éléments d'étanchéité (30a, 30b) étant constitués de forme annulaire et constituant entre eux un interstice radial (31) dans lequel débouche l'élément d'alimentation de fluide (32).

8. Agencement (15) selon la revendication 7, **caractérisé en ce que** l'interstice radial (31) de la bride d'accostage (25) et la bride (21) du four à rouleaux (1) constituent une chambre de contrôle (33) lorsque le sas (18) est couplé au four à rouleaux (1) dans laquelle l'élément d'alimentation de fluide (32) introduit le fluide de contrôle pour contrôler l'étanchéité de la liaison d'accostage.

9. Procédé pour changer des rouleaux porteurs (2) d'un four à rouleaux (1) au moyen d'un dispositif de changement de rouleau porteur (14), le dispositif de changement de rouleau porteur (14) étant déplacé latéralement près du four à rouleaux (1) à la position du rouleau porteur (2) à démonter, le rouleau porteur (2) étant découplé d'une unité d'entraînement (6) et le dispositif de changement de rouleau porteur (14) étant ensuite rapproché sur le four à rouleaux (1) au rouleau porteur (2) à démonter, un sas (18) du dispositif de changement de rouleau porteur (14) étant couplé étanche aux gaz au four à rouleaux (1),
**caractérisé en ce que** lors de l'accostage entre une bride (21) du four à rouleaux (1) et une bride d'accostage (25) du sas (18) une chambre de contrôle (33) est constituée dans laquelle un fluide de contrôle de pression est introduit pour vérifier l'étanchéité aux gaz de la liaison d'accostage.

10. Procédé selon la revendication 9, **caractérisé en ce que** l'étanchéité aux gaz de la liaison d'accostage est vérifiée à l'aide de la pression qui est accumulée dans la chambre de contrôle (33) par le fluide de contrôle de pression introduit lors de l'étanchéité aux gaz de la liaison d'accostage.
